(19) Europäisches Patentamt
European Patent Office
Office européen des brevets

(11) **EP 4 692 390 A1**

(12) **EUROPEAN PATENT APPLICATION**
published in accordance with Art. 153(4) EPC

(43) Date of publication:
**11.02.2026 Bulletin 2026/07**

(21) Application number: **23930389.4**

(22) Date of filing: **28.03.2023**

(51) International Patent Classification (IPC):
**C22C 19/05** *(2006.01)*     **C22C 30/06** *(2006.01)*
**C22F 1/00** *(2006.01)*     **C22F 1/10** *(2006.01)*

(52) Cooperative Patent Classification (CPC):
**C22C 19/05; C22C 30/06;** C22F 1/00; C22F 1/10

(86) International application number:
**PCT/JP2023/012654**

(87) International publication number:
**WO 2024/201749 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NIPPON STEEL CORPORATION
Chiyoda-ku
Tokyo 100-8071 (JP)**

(72) Inventors:
• **OSUKI, Takahiro
Tokyo 100-8071 (JP)**
• **NAKANE, Kazuya
Tokyo 100-8071 (JP)**
• **MATSUDA, Kohei
Tokyo 100-8071 (JP)**
• **TODA, Yoshihiro
Tokyo 100-8071 (JP)**

(74) Representative: **Zimmermann & Partner
Patentanwälte mbB
P.O. Box 330 920
80069 München (DE)**

(54) **CR-NI ALLOY TUBE**

(57)     A Cr-Ni alloy pipe is provided in which a tensile yield stress $YS_{LT}$ and a compressive yield stress $YS_{LC}$ in a pipe axis direction of the Cr-Ni alloy pipe, and a tensile yield stress $YS_{HT}$ of a test specimen after high-frequency induction heating and quenching that is taken from the center position of the wall thickness of the Cr-Ni alloy pipe so that the longitudinal direction of the test specimen is parallel to the pipe axis direction satisfy $[0.80 \leq YS_{LC}/YS_{LT} < 0.95]$, $[YS_{HT} - 0.24 \times YS_{LT} \geq 50.0]$, and $[YS_{LT} \geq 443 \times YS_{LT}/YS_{LC} + 2.28 \times YS_{HT} - 350]$.

**EP 4 692 390 A1**

**Description**

TECHNICAL FIELD

The present invention relates to a Cr-Ni alloy pipe.

BACKGROUND ART

In recent years, extraction conditions in oil wells and gas wells (hereinafter, oil wells and gas wells are referred to collectively as "oil wells") from which crude oil, natural gas and the like are extracted are becoming increasingly severe. Therefore, an austenitic alloy pipe containing Cr and Ni and having excellent corrosion resistance (hereinafter, also referred to as a "Cr-Ni alloy pipe") may be used for oil country tubular goods which are utilized in the oil wells.

Further, oil country tubular goods are also required to have high strength in addition to excellent corrosion resistance. The strength grade of oil country tubular goods is generally defined based on the tensile yield stress in the pipe axis direction. A user of oil country tubular goods determines the environment (formation pressure, and temperature and pressure of the production fluid) of the oil well to be drilled through exploratory drilling and geological surveys, and selects oil country tubular goods that have a strength grade that can withstand the environment.

However, it is known that in corrosion-resistant alloy pipes subjected to cold working, the compressive yield strength in the pipe axis direction is less than the tensile yield stress in the pipe axis direction. As mentioned above, the strength grade of oil country tubular goods is generally determined based on the tensile yield strength. Therefore, it is preferable for a difference between the compressive yield stress and the tensile yield stress to be small.

Patent Document 1 discloses an austenitic alloy pipe in which the anisotropy in yield strength is low, and which can therefore withstand stress even when subjected to stress distributions that vary depending on the usage environment.

LIST OF PRIOR ART DOCUMENT

PATENT DOCUMENT

Patent Document 1: WO 2012/128258

SUMMARY OF INVENTION

TECHNICAL PROBLEM

In this connection, in some cases Cr-Ni alloy pipes as oil country tubular goods are used after being joined by welding to other alloy pipes or steel pipes. At such times, softening caused by welding heat occurs in a weld zone of the Cr-Ni alloy pipe. Therefore, it is necessary to select oil country tubular goods that have a strength grade capable of withstanding use in the target oil well environment, while taking into consideration such softening at a weld zone.

Even if softening occurs in a weld zone, it is conceivable to increase the cold working reduction rate in order to maintain high strength. However, this is not preferable as it will result in a marked decrease in compressive yield stress in comparison to tensile yield stress.

An objective of the present invention is to solve the above problem and provide a Cr-Ni alloy pipe having high strength while also minimizing the difference between compressive yield stress and tensile yield stress.

SOLUTION TO PROBLEM

The gist of the present invention, which has been made to solve the above problem, is a Cr-Ni alloy pipe described below.

(1) A Cr-Ni alloy pipe, wherein:

a tensile yield stress $YS_{LT}$ and a compressive yield stress $YS_{LC}$ in a pipe axis direction of the Cr-Ni alloy pipe, and a tensile yield stress $YS_{HT}$ of a test specimen obtained by taking the test specimen from a center position of a wall thickness of the Cr-Ni alloy pipe so that a longitudinal direction of the test specimen is parallel to the pipe axis direction, heating the test specimen from room temperature to 1150°C at a heating rate of 100°C/s followed by heating the test specimen to 1200°C at a heating rate of 25°C/s using a high-frequency induction heating apparatus, and then holding the test specimen at 1200°C for 180 s, and thereafter blowing Ar gas against the test specimen to quench the test specimen to room temperature under conditions whereby a cooling rate in a temperature range from 1200°C to 800°C is 50°C/s,
satisfy Formula (i) to Formula (iii) below:

$$0.80 \leq YS_{LC}/YS_{LT} < 0.95 \quad (i)$$

$$YS_{HT} - 0.24 \times YS_{LT} \geq 50.0 \quad (ii)$$

$$YS_{LT} \geq 443 \times YS_{LT}/YS_{LC} + 2.28 \times YS_{HT} - 350 \quad (iii)$$

where, the meaning of each symbol in the above formulas is as follows:

$YS_{LC}$: compressive yield stress (MPa) in the pipe axis direction;
$YS_{LT}$: tensile yield stress (MPa) in the pipe axis direction; and
$YS_{HT}$: tensile yield stress (MPa) of the test specimen after high-frequency induction heating and quenching.

(2) The Cr-Ni alloy pipe according to (1) above, wherein:
the tensile yield stress $YS_{LT}$ in the pipe axis direction of the Cr-Ni alloy pipe is 780 MPa or more.
(3) The Cr-Ni alloy pipe according to (1) or (2) above, having a chemical composition containing, in mass%,

C: 0.030% or less,
Si: 0.50% or less,
Mn: 1.00% or less,
P: 0.030% or less,
S: 0.0050% or less,
Cr: 19.00 to 32.00%,
Ni: 29.50 to 55.00%,
Mo: 2.50 to 12.00%,
Cu: 3.00% or less,
V: 0.01 to 0.50%,
Nb + Ti: 0.002 to 1.000%,
Al: 0.001 to 0.500%,
N: 0.005 to 0.400%,
W: 0 to 1.00%,
Co: 0 to 1.00%,
Sn: 0 to 0.010%,
As: 0 to 0.010%,
Zn: 0 to 0.010%,
Pb: 0 to 0.010%,
Sb: 0 to 0.010%,
B: 0 to 0.0050%,
Ca: 0 to 0.0200%,
Mg: 0 to 0.0200%,
REM: 0 to 0.100%, and
the balance: Fe and impurities.

(4) The Cr-Ni alloy pipe according to (3) above, wherein:

the chemical composition contains one or more types of element selected from, in mass%,
W: 0.01 to 1.00%,
Co: 0.01 to 1.00%,
Sn: 0.001 to 0.010%,
As: 0.001 to 0.010%,
Zn: 0.001 to 0.010%,
Pb: 0.0005 to 0.010%,
Sb: 0.0005 to 0.010%,

B: 0.0001 to 0.0050%,
Ca: 0.0005 to 0.0200%,
Mg: 0.0001 to 0.0200%, and
REM: 0.001 to 0.100%.

(5) The Cr-Ni alloy pipe according to (3) or (4) above, wherein the chemical composition further satisfies Formula (iv) and Formula (v) below:

$$9Mo + 100N \geq 45.0 \quad (iv)$$

$$Ni + 1.4Cu + Mo - 0.9Cr - 2Si - 1.2Mn - 5.7C + 20N + 90(0.15Nb + 0.27V + 0.3Ti) \leq 42.0 \quad (v)$$

where, each symbol of an element in the above formulas represents a content (mass%) of a corresponding element in the alloy pipe, and is assigned a value of zero if the corresponding element is not contained.

(6) The Cr-Ni alloy pipe according to any one of (3) to (5) above, wherein the chemical composition further satisfies Formula (vi) below:

$$0.001 \times YS_{LT} - 0.820 < N < 0.001 \times YS_{LT} - 0.740 \quad (vi)$$

where, the meaning of each symbol in the above formula is as follows:

$YS_{LC}$: compressive yield stress (MPa) in the pipe axis direction; and
N: content of N (mass%) in the alloy pipe.

ADVANTAGEOUS EFFECTS OF INVENTION

According to the present invention, a Cr-Ni alloy pipe that has high strength while also minimizing the difference between compressive yield stress and tensile yield stress can be obtained.

DESCRIPTION OF EMBODIMENTS

The respective requirements of the present invention are described in detail hereunder.

1. Mechanical Properties

The mechanical properties of the Cr-Ni alloy pipe according to the present embodiment will now be described. The Cr-Ni alloy pipe of the present embodiment has mechanical properties that satisfy the following Formula (i) to Formula (iii). Note that, in the present invention, the term "Cr-Ni alloy pipe" means an austenitic alloy pipe containing Cr: 19.00 to 32.00% and Ni: 29.50 to 55.00%.

<Strength anisotropy>

Although the strength of the Cr-Ni alloy pipe according to the present embodiment is enhanced by work hardening by cold working, if the Cr-Ni alloy pipe is thereafter subjected to a heat treatment at a high temperature, the strength will decrease and it will not be possible to maintain the necessary strength in the usage environment. In other words, a state of the Cr-Ni alloy pipe according to the present embodiment is a state as it is after cold working, or is a state after being subjected to a heat treatment at low temperature after cold working. Consequently, inevitably, the tensile yield stress in the pipe axis direction of the Cr-Ni alloy pipe will be higher than the compressive yield stress in the pipe axis direction.

However, if the difference between the compressive yield stress and the tensile yield stress in the pipe axis direction is excessive, even if the tensile yield stress is sufficient, the compressive yield stress will be insufficient and it will not be possible to use the Cr-Ni alloy pipe as oil country tubular goods. Therefore, it is necessary for the compressive yield stress and the tensile yield stress in the pipe axis direction to satisfy the following Formula (i):

$$0.80 \leq YS_{LC}/YS_{LT} < 0.95 \quad (i)$$

where, the meaning of each symbol in the above formula is as follows:

$YS_{LC}$: Compressive yield stress (MPa) in the pipe axis direction

$YS_{LT}$: Tensile yield stress (MPa) in the pipe axis direction.

The value of $YS_{LC}/YS_{LT}$ is preferably 0.82 or more, more preferably 0.84 or more, and further preferably 0.86 or more. Further, the value of $YS_{LC}/YS_{LT}$ may be made 0.94 or less.

Note that, although it is not particularly necessary to set a limit with regard to the tensile yield stress $YS_{LT}$ in the pipe axis direction, as mentioned above, since the state of the Cr-Ni alloy pipe according to the present embodiment is the state as it is after cold working or is the state after the Cr-Ni alloy pipe is subjected to a heat treatment at low temperature after cold working, the tensile yield stress $YS_{LT}$ in the pipe axis direction will be 780 MPa or more. The tensile yield stress $YS_{LT}$ in the pipe axis direction is preferably 800 MPa or more, more preferably 820 MPa or more, further preferably 840 MPa or more, and further preferably 850 MPa or more.

Specifically, the compressive yield stress in the pipe axis direction is determined by the following method. A compression test is carried out by a method in accordance with ASTM E9 (2019). A cylindrical test specimen for a compression test is prepared from the center position of the wall thickness of the Cr-Ni alloy pipe. Regarding the size of the cylindrical test specimen, for example, the parallel portion diameter is 4 mm and the length is 8 mm. Note that, the longitudinal direction of the cylindrical test specimen is to be parallel to the pipe axis direction of the Cr-Ni alloy pipe. A compression test is carried out in air at normal temperature (25°C) using the cylindrical test specimen, and the obtained 0.2% offset proof stress is defined as the compressive yield stress $YS_{LC}$ (MPa) in the pipe axis direction.

Similarly, the tensile yield stress in the pipe axis direction is determined by the following method. A tensile test is carried out by a method in accordance with ASTM E8/E8M (2021). A round bar specimen for a tensile test is prepared from the center position of the wall thickness of the Cr-Ni alloy pipe. Regarding the size of the round bar specimen, for example, the parallel portion diameter is 4 mm and the gage length is 20 mm. Note that, the longitudinal direction of the round bar specimen is to be parallel to the pipe axis direction of the Cr-Ni alloy pipe. A tensile test is carried out in air at normal temperature (25°C) using the round bar specimen, and the obtained 0.2% offset proof stress is defined as the tensile yield strength $YS_{LT}$ (MPa).

<Base strength>

As mentioned above, although the strength of the Cr-Ni alloy pipe can be enhanced by cold working, excessive working leads to an increase in the anisotropy. Therefore, in order to avoid excessive working, it is necessary to sufficiently secure the strength before cold working, that is, the strength in a state without the effect of work hardening (hereinafter, also referred to as "base strength"). As a result of studies conducted by the present inventors, it has been discovered that an index of base strength can be obtained based on the tensile yield stress of a test specimen from which the influence of work hardening has been eliminated by high-frequency induction heating and quenching, and the tensile yield stress in the pipe axis direction of the Cr-Ni alloy pipe.

Specifically, by satisfying the following Formula (ii), the Cr-Ni alloy pipe has sufficient base strength for use as oil country tubular goods:

$$YS_{HT} - 0.24 \times YS_{LT} \geq 50.0 \quad \text{(ii)}$$

where, the meaning of each symbol in the above formula is as follows.

$YS_{LT}$: Tensile yield stress (MPa) in the pipe axis direction

$YS_{HT}$: Tensile yield stress (MPa) of the test specimen after high-frequency induction heating and quenching

Note that, a test specimen after high-frequency induction heating and quenching is obtained by the following procedure. First, a test specimen is taken from the center position of the wall thickness of the Cr-Ni alloy pipe in a manner so that the longitudinal direction of the test specimen is parallel to the pipe axis direction. The test specimen is prepared in accordance with ASTM E8/E8M (2021). Specifically, if the wall thickness of the alloy pipe is 6 mm or more, a cylindrical test specimen having a diameter of 6 mm and a gage length of 30 mm is used. Further, if the wall thickness of the alloy pipe is less than 6 mm, an arc-shaped test specimen having a thickness that is the same as the wall thickness of the alloy pipe and having a gage length of 50 mm is used.

Next, a high-frequency induction heating apparatus is used to subject the aforementioned cylindrical test specimen to heating from room temperature to 1150°C at a heating rate of 100°C/s, followed by heating to 1200°C at a heating rate of 25°C/s. At this time, the region to be heated by the high-frequency induction heating apparatus is a region of 7.0 mm in the longitudinal direction that consists of two regions of 3.5 mm each on the sides of both ends from the center in the longitudinal direction of the test specimen. The temperature of the test specimen is measured using a thermocouple placed at the central part in the longitudinal direction of the test specimen.

Thereafter, the test specimen is held at 1200°C for 180 s. Immediately after holding, Ar gas is blown against the test specimen to perform quenching to room temperature under conditions whereby the cooling rate in the temperature range from 1200°C to 800°C is 50°C/s. Then, using the test specimen after the high-frequency induction heating and quenching, a tensile test is carried out in air at normal temperature (25°C) in accordance with JIS Z 2241 (2011), and the obtained 0.2% offset proof stress is defined as the tensile yield stress $YS_{HT}$ (MPa) of the test specimen after high-frequency induction heating and quenching.

<Work hardenability>

In order to enhance strength by cold working while suppressing an increase in the anisotropy, excellent work hardenability that enables efficient work hardening even with a small reduction rate is required. As a result of conducting intensive research, the present inventors have discovered that the reciprocal of $YS_{LC}/YS_{LT}$ which is an index of the anisotropy, that is, $YS_{LT}/YS_{LC}$, is also an index of the reduction rate. Furthermore, the present inventors have come to the discovery that the relational expression among the tensile yield stress in the pipe axis direction of the Cr-Ni alloy pipe, $YS_{LT}/YS_{LC}$ which is an index of the reduction rate, and the tensile yield stress $YS_{HT}$ of the test specimen from which the influence of work hardening has been eliminated by high-frequency induction heating and quenching, is an index of work hardenability.

Specifically, by satisfying the following Formula (iii), the Cr-Ni alloy pipe has sufficient work hardenability for use as oil country tubular goods:

$$YS_{LT} \geq 443 \times YS_{LT}/YS_{LC} + 2.28 \times YS_{HT} - 350 \qquad \text{(iii)}$$

where, the meaning of each symbol in the above formula is as follows.

$YS_{LC}$: Compressive yield stress (MPa) in the pipe axis direction
$YS_{LT}$: Tensile yield stress (MPa) in the pipe axis direction
$YS_{HT}$: Tensile yield stress (MPa) of the test specimen after high-frequency induction heating and quenching

As described above, based on the values of three mechanical properties, namely, the tensile yield stress and the compressive yield stress in the pipe axis direction of the Cr-Ni alloy pipe, and the tensile yield stress of the test specimen after high-frequency induction heating and quenching, it is possible to select a Cr-Ni alloy pipe that can maintain high strength even in a case where softening has occurred in a weld zone and that serves as a highly reliable starting material for oil country tubular goods.

2. Chemical Composition

The chemical composition of the Cr-Ni alloy pipe according to the present embodiment is not particularly limited as long as the chemical composition contains a predetermined amount of Cr and Ni, and the Cr-Ni alloy pipe has the mechanical properties described above. Preferably the Cr-Ni alloy pipe according to the present embodiment has, for example, the chemical composition described below. The reasons for limiting each element are as follows. Note that, the symbol "%" in relation to content in the following description means "mass percent".

C: 0.030% or less

C (carbon) is an element that produces an effect of increasing the strength of the alloy. However, if C is contained in excess, Cr carbides will form at grain boundaries. The Cr carbides will increase stress corrosion cracking (SCC) susceptibility at the grain boundaries. Therefore, the content of C is 0.030% or less. A preferable content of C is less than 0.030%, more preferably 0.025%, and further preferably 0.020% or less. A preferable lower limit of the content of C is 0.001%, more preferably 0.003%, and further preferably 0.005%.

Si: 0.50% or less

Si (silicon) is an element that produces an action of deoxidizing the alloy. However, if Si is contained in excess, hot workability of the alloy will decrease. Therefore, the content of Si is 0.50% or less. A preferable content of Si is less than 0.50%. A preferable upper limit of the content of Si is 0.45%, and more preferably 0.40%. A preferable lower limit of the content of Si is 0.05%, and more preferably 0.10%.

Mn: 1.00% or less

Mn (manganese) is an element that produces an action of deoxidizing the alloy. Mn is also an austenite forming element, and stabilizes the austenite phase. However, if Mn is contained in excess, hot workability of the alloy will decrease. Therefore, the content of Mn is 1.00% or less. A preferable content of Mn is less than 1.00%. A preferable upper limit of the content of Mn is 0.90%, and more preferably 0.80%. A preferable lower limit of the content of Mn is 0.10%, and more preferably 0.30%.

P: 0.030% or less

P (phosphorus) is an impurity element. In a hydrogen sulfide environment, P increases the stress corrosion cracking susceptibility of the alloy. Therefore, the lower the content of P is, the more preferable it is, and thus the content of P is 0.030% or less. A preferable content of P is 0.025% or less, and more preferably 0.020% or less.

S: 0.0050% or less

S (sulfur) is an impurity element. S decreases hot workability of the alloy. Therefore, the lower the content of S is, the more preferable it is, and thus the content of S is 0.0050% or less. A preferable content of S is 0.0030% or less, and more preferably 0.0010% or less.

Cr: 19.00 to 32.00%

Cr (chromium) is an element that produces an effect of increasing the stress corrosion cracking resistance (SCC resistance) of the alloy in coexistence with Ni. Cr also increases the strength of the alloy by solid-solution strengthening. On the other hand, if Cr is contained in excess, the effects thereof will be saturated, and in addition, hot workability of the alloy will decrease. Therefore, the content of Cr is 19.00 to 32.00%. A preferable lower limit of the content of Cr is 21.00%, and more preferably 23.00%. A preferable upper limit of the content of Cr is 30.00%, and more preferably 28.00%.

Ni: 29.50 to 55.00%

Ni (nickel) is an austenite forming element, and is an element that produces an effect of stabilizing the austenite phase. Ni also increases SCC resistance. However, if Ni is contained in excess, the effect thereof will be saturated. Therefore, the content of Ni is 29.50 to 55.00%. A preferable lower limit of the content of Ni is 34.00%, and more preferably 40.00%. A preferable upper limit of the content of Ni is 53.00%, and more preferably 50.00%.

Mo: 2.50 to 12.00%

Mo (molybdenum) is an element that produces an effect of increasing SCC resistance of the alloy in coexistence with Cr and Ni. Mo also increases the strength of the alloy by solid-solution strengthening. However, if Mo is contained in excess, the effect thereof will be saturated, and in addition, hot workability of the alloy will decrease. Therefore, the content of Mo is 2.50 to 12.00%. A preferable lower limit of the content of Mo is 3.50%, and more preferably 5.00%. A preferable upper limit of the content of Mo is 10.00%, and more preferably 8.00%.

Cu: 3.00% or less

Cu (copper) produces an effect of stabilizing a passive film, and is an element that is effective for enhancing pitting resistance and general corrosion resistance. However, if Cu is contained in excess, the effect thereof will be saturated, and in addition, hot workability will decrease. Therefore, the content of Cu is 3.00% or less. A preferable content of Cu is 2.00% or less, and more preferably 1.20% or less. A preferable lower limit of the content of Cu is 0.10%, and more preferably 0.50%.

V: 0.01 to 0.50%

V (vanadium) is an element that produces an effect of increasing the strength of the alloy by finely precipitating within grains as a carbide, nitride, or carbo-nitride. V also produces an effect of refining grains by pinning grain boundaries. Furthermore, V increases solubility of N in the alloy, and thereby suppresses the occurrence of pinholes near the surface when the content of N is increased in order to increase the strength of the alloy. However, if V is contained in excess, the amount of precipitates will be excessive, and not only will toughness decrease, but the risk of weld cracks in a heat affected zone will also increase. Therefore, the content of V is 0.01 to 0.50%. A preferable lower limit of the content of V is 0.02%, and more preferably 0.03%. A preferable upper limit of the content of V is 0.35%, and more preferably 0.20%.

Nb + Ti: 0.002 to 1.000%

Nb (niobium) and Ti (titanium) are elements that produce an effect of increasing the strength of the alloy by finely precipitating within grains as carbides, nitrides, or carbo-nitrides. Nb and Ti also produce an effect of refining grains by pinning grain boundaries. In addition, Nb and Ti increase solubility of N in the alloy, and thereby suppress the occurrence of pinholes near the surface when the content of N is increased in order to increase the strength of the alloy. However, if Nb and/or Ti are contained in excess, the amount of precipitates will be excessive, and not only will toughness decrease, but the risk of weld cracks in a heat affected zone will also increase. Therefore, one or both of Nb and Ti are contained, and the total content of Nb and Ti is 0.002 to 1.000%. A preferable lower limit of the total content is 0.010%, and more preferably 0.030%. A preferable upper limit of the total content is 0.500%, and more preferably 0.300%.

Al: 0.001 to 0.500%

Al (aluminum) is an element that produces an action of deoxidizing the alloy. However, if Al is contained in excess, Al will impair cleanliness, and the workability and ductility will deteriorate. Therefore, the content of Al is 0.001 to 0.500%. A preferable lower limit of the content of Al is 0.005%, and more preferably 0.010%. A preferable upper limit of the content of Al is 0.300%, and more preferably 0.100%. Note that, in the present invention, the term "content of Al" refers to the content of acid-soluble Al (so-called "sol. Al").

N: 0.005 to 0.400%

N (nitrogen) increases the strength of the alloy by solid-solution strengthening. When N is contained and a solution heat treatment is performed, an alloy pipe that has high strength will be obtained. By utilizing the alloy pipe that has high strength, even in a case of performing cold working with a low reduction rate, the desired strength will be obtained in the alloy pipe after cold working. However, if N is contained in excess, pinholes will easily occur near the surface during solidification of the alloy. Furthermore, N will decrease hot workability of the alloy. Therefore, the content of N is 0.005 to 0.400%. A preferable lower limit of the content of N is 0.010%, more preferably 0.030%, and further preferably 0.060%. A preferable upper limit of the content of N is 0.350%, and more preferably 0.300%.

In the Cr-Ni alloy pipe according to the present embodiment, one or more types of element selected from W, Co, Sn, As, Zn, Pb, Sb, B, Ca, Mg, and REM may also be contained in addition to the elements described above. Note that, it is not necessary to set a lower limit for the content of any of these elements, and the content may be 0%.

W: 0 to 1.00%

W (tungsten) is a selective element. Therefore, W does not have to be contained. W produces an effect of increasing SCC resistance, and therefore may be contained as necessary. However, if W is contained in excess, the effect thereof will be saturated and, in addition, hot workability will decrease. Therefore, the content of W is 1.00% or less. A preferable content of W is 0.50% or less, and more preferably 0.30% or less. A preferable lower limit of the content of W is 0.01%, and more preferably 0.05%.

Co: 0 to 1.00%

Co (cobalt) is a selective element. Therefore, Co does not have to be contained. Similarly to Ni, Co produces an effect of increasing the stability of the austenite phase, and therefore may be contained as necessary. However, because Co is an extremely expensive element, an increase in the content of Co leads to an increase in costs. Therefore, the content of Co is 1.00% or less. A preferable content of Co is 0.50% or less, and more preferably 0.30% or less. A preferable lower limit of the content of Co is 0.01%, and more preferably 0.05%.

Sn: 0 to 0.010%

Sn (tin) is a selective element. Therefore, Sn does not have to be contained. Sn exerts an influence on convection of the molten pool during welding, and produces an effect of increasing the depth of penetration and enhancing weldability, and therefore may be contained as necessary. However, if Sn is contained in excess, not only will Sn increase weld crack susceptibility, but it will also lead to a decrease in corrosion resistance. Therefore, the content of Sn is 0.010% or less. A preferable content of Sn is 0.008% or less, and more preferably 0.006% or less. A preferable lower limit of the content of Sn is 0.001%, and more preferably 0.002%.

As: 0 to 0.010%

As (arsenic) is a selective element. Therefore, As does not have to be contained. As exerts an influence on convection of the molten pool during welding, and produces an effect of increasing the depth of penetration and enhancing weldability, and therefore may be contained as necessary. However, if As is contained in excess, not only will As increase weld crack susceptibility, but it will also lead to a decrease in corrosion resistance. Therefore, the content of As is 0.010% or less. A preferable content of As is 0.008% or less, and more preferably 0.006% or less. A preferable lower limit of the content of As is 0.001%, and more preferably 0.002%.

Zn: 0 to 0.010%

Zn (zinc) is a selective element. Therefore, Zn does not have to be contained. Zn exerts an influence on convection of the molten pool during welding, and produces an effect of increasing the depth of penetration and enhancing weldability, and therefore may be contained as necessary. However, if Zn is contained in excess, not only will Zn increase weld crack susceptibility, but it will also lead to a decrease in corrosion resistance. Therefore, the content of Zn is 0.010% or less. A preferable content of Zn is 0.008% or less, and more preferably 0.006% or less. A preferable lower limit of the content of Zn is 0.001%, and more preferably 0.002%.

Pb: 0 to 0.010%

Pb (lead) is a selective element. Therefore, Pb does not have to be contained. Pb exerts an influence on convection of the molten pool during welding, and produces an effect of increasing the depth of penetration and enhancing weldability, and therefore may be contained as necessary. However, if Pb is contained in excess, not only will Pb increase weld crack susceptibility, but it will also lead to a decrease in corrosion resistance. Therefore, the content of Pb is 0.010% or less. A preferable content of Pb is 0.008% or less, and more preferably 0.006% or less. A preferable lower limit of the content of Pb is 0.0005%, and more preferably 0.001%.

Sb: 0 to 0.010%

Sb (antimony) is a selective element. Therefore, Sb does not have to be contained. Sb exerts an influence on convection of the molten pool during welding, and produces an effect of increasing the depth of penetration and enhancing weldability, and therefore may be contained as necessary. However, if Sb is contained in excess, not only will Sb increase weld crack susceptibility, but it will also lead to a decrease in corrosion resistance. Therefore, the content of Sb is 0.010% or less. A preferable content of Sb is 0.008% or less, and more preferably 0.006% or less. A preferable lower limit of the content of Sb is 0.0005%, and more preferably 0.001%.

B: 0 to 0.0050%

B (boron) is a selective element. Therefore, B does not have to be contained. B is an element that contributes to grain-boundary strengthening and enhances hot workability, and therefore may be contained as necessary. However, if B is contained in excess, the effect thereof will be saturated and, furthermore, B will cause liquation cracking to occur at grain boundaries of a heat affected zone during welding. Therefore, the content of B is 0.0050% or less. A preferable content of B is 0.0030% or less, and more preferably 0.0015% or less. A preferable lower limit of the content of B is 0.0001%, and more preferably 0.0003%.

Ca: 0 to 0.0200%

Ca (calcium) is a selective element. Therefore, Ca does not have to be contained. Ca produces an effect of fixing S as a sulfide to thereby enhance hot workability of the alloy, and therefore Ca may be contained as necessary. However, if Ca is contained in excess, coarse oxides will be formed and hot workability of the alloy will, on the contrary, decrease. Therefore, the content of Ca is 0.0200% or less. A preferable content of Ca is 0.0100% or less, and more preferably 0.0050% or less. A preferable lower limit of the content of Ca is 0.0005%, and more preferably 0.0010%.

Mg: 0 to 0.0200%

Mg (magnesium) is a selective element. Therefore, Mg does not have to be contained. Similarly to Ca, Mg produces an effect of fixing S as a sulfide to thereby enhance hot workability of the alloy, and therefore Mg may be contained as necessary. However, if Mg is contained in excess, coarse oxides will be formed and hot workability of the alloy will, on the contrary, decrease. Therefore, the content of Mg is 0.0200% or less. A preferable content of Mg is 0.0100% or less, more preferably 0.0050% or less, and further preferably 0.0020% or less. A preferable lower limit of the content of Mg is 0.0001%, and more preferably 0.0005%.

REM: 0 to 0.100%

REM (rare earth metal) is a selective element. Therefore, REM does not have to be contained. Similarly to Ca and Mg, REM produces an effect of fixing S as a sulfide to thereby enhance hot workability of the alloy, and therefore REM may be contained as necessary. However, if REM is contained in excess, coarse oxides will be formed and hot workability of the alloy will, on the contrary, decrease. Therefore, the content of REM is 0.100% or less. A preferable content of REM is 0.050% or less, and more preferably 0.030% or less. A preferable lower limit of the content of REM is 0.001%, and more preferably 0.005%.

In the present embodiment, the term "REM" refers to a total of 17 elements which are Sc, Y, and the lanthanoids, and in a case where one type of REM is contained, the term "content of REM" refers to the content of the relevant one type of REM, and in a case where two or more types of REM elements are contained, the term "content of REM" refers to the total content of the two or more types of REM elements. Further, REM is generally supplied as a misch metal that is an alloy of a plurality of types of REM element. Therefore, REM may be contained by adding one or more types of individual elements, or for example, may be added in the form of a misch metal.

The Cr-Ni alloy pipe according to the present embodiment contains the respective elements described above, with the balance being Fe and impurities. Here, the term "impurities" means components which, when industrially producing the alloy material, are mixed in from raw material such as ore or scrap or due to various factors during the production processes, and which are allowed within a range that does not adversely affect the present invention.

Preferably, the chemical composition of the Cr-Ni alloy pipe according to the present embodiment also satisfies the following Formula (iv) and Formula (v):

$$9\text{Mo} + 100\text{N} \geq 45.0 \quad \text{(iv)}$$

$$\text{Ni} + 1.4\text{Cu} + \text{Mo} - 0.9\text{Cr} - 2\text{Si} - 1.2\text{Mn} - 5.7\text{C} + 20\text{N} + 90(0.15\text{Nb} + 0.27\text{V} + 0.3\text{Ti}) \leq 42.0 \quad \text{(v)}$$

where, each symbol of an element in the above formulas represents the content (mass%) of the corresponding element, and is assigned a value of zero if the corresponding element is not contained.

The present inventors analyzed the relation between mechanical properties and chemical composition with respect to various Cr-Ni alloy pipes, and as a result it has been revealed that in the above chemical composition, particularly Mo and N contribute to the base strength. Further, it has been found that by satisfying the above Formula (iv), a high base strength is stably obtained.

Note that, although it is not necessary to set an upper limit for the value of 9Mo + 100N, from the viewpoint of suppressing a decrease in hot workability, preferably the value of 9Mo + 100N is 85.0 or less, and more preferably 83.0 or less.

In addition, the present inventors focused on elements that affect stacking fault energy, and analyzed the relation between mechanical properties and chemical composition in this regard, and as a result it has been revealed that by satisfying the above Formula (v), excellent work hardenability is stably obtained.

It is not necessary to set a lower limit for the left side value of Formula (v), and the lower the value is, the more preferable it is. However, based on the range of the content of each element, the practical lower limit value is 1.2.

Preferably, the chemical composition of the Cr-Ni alloy pipe according to the present embodiment also satisfies the following Formula (vi). As mentioned above, when the cold working reduction rate is high, there is a tendency for the anisotropy to increase. However, by adjusting the content of N so as to satisfy the following Formula (vi) with respect to the relation with tensile yield stress in the pipe axis direction of the Cr-Ni alloy pipe, it will become easy to suppress an increase in the anisotropy even in a case where the Cr-Ni alloy pipe has a strength of 900 MPa or more.

$$0.001 \times \text{YS}_{\text{LT}} - 0.820 < \text{N} < 0.001 \times \text{YS}_{\text{LT}} - 0.740 \quad \text{(vi)}$$

$\text{YS}_{\text{LC}}$: Compressive yield stress (MPa) in the pipe axis direction
N: Content of N (mass%) in the alloy pipe

3. Production Method

An example of a method for producing the Cr-Ni alloy pipe according to the present embodiment will now be described.

First, an austenitic alloy is melted to produce molten metal. An electric furnace, an Ar-O$_2$ mixed gas bottom-blowing decarburization furnace (AOD furnace), a vacuum decarburization furnace (VOD furnace) or the like can be utilized to melt the alloy.

Next, a cast material is produced using the molten metal. The cast material is, for example, an ingot, a slab, or a bloom. Specifically, an ingot is produced by an ingot-making process, or a slab or a bloom is produced by a continuous casting process.

Next, the cast material is subjected to hot working to produce a round billet. The hot working is, for example, hot rolling or hot forging. The produced round billet is subjected to hot working to produce a hollow shell. Specifically, the hollow shell is produced from the round billet by an extrusion pipe production method represented by the Ugine-Sejournet process. Alternatively, the hollow shell is produced from the round billet by the Mannesmann pipe making process.

The produced hollow shell is subjected to cold working. The types of cold working that can be performed include cold drawing and cold rolling that is represented by Pilger rolling. In the present invention, either of cold drawing and cold rolling may be employed. In comparison to cold rolling, cold drawing imparts a large amount of tensile strain in the pipe axis direction to the alloy pipe. Cold rolling imparts a large amount of strain not only in the pipe axis direction but also in the pipe circumferential direction of the hollow shell. Therefore, in comparison to cold drawing, cold rolling imparts a large amount of compressive strain in the pipe circumferential direction of the hollow shell.

A preferable reduction of area during cold working is 15% or more. Here, the reduction of area is defined by the following Equation (I). A preferable lower limit of the reduction of area is 20%. On the other hand, if the reduction of area is too high, not only will roundness of the alloy pipe decrease, but the anisotropy will also become more noticeable. Therefore, a preferable upper limit of the reduction of area during cold working is 50%.

Reduction of area (%) = 100 × (cross-sectional area of hollow shell before cold working - cross-sectional area of hollow shell after cold working)/cross-sectional area of hollow shell before cold working (I)

Another treatment may be performed between the hot working and the cold working. For example, the hollow shell subjected to hot working may be subjected to a solution heat treatment. In this case, the hollow shell after the solution heat treatment is subjected to descaling to remove scale, and thereafter is subjected to cold working. Furthermore, the cold working may be performed a plurality of times. In the case of performing the cold working a plurality of times, between one cold working process and the next cold working process, a solution heat treatment may be performed as a softening heat treatment.

Further, after cold working, straightening using a skew roll straightening machine and/or a heat treatment at low temperature may be performed for the purpose of reducing the anisotropy. Either one of the straightening and the low-temperature heat treatment may be performed first. However, if the heat treatment temperature is too high, the yield stress will excessively decrease and it will not be possible to maintain the necessary strength in the usage environment. Therefore, in the case of performing a low-temperature heat treatment, the heating temperature is to be set in the range of 300 to 550°C, and preferably set in the range of 400 to 500°C.

Although there are no particular limitations regarding the dimensions of the alloy pipe obtained by the above process, from the viewpoint of maintaining the necessary strength in the usage environment it is preferable that the wall thickness of the alloy pipe is 4 mm or more, more preferably 6 mm or more, further preferably 8 mm or more, and further preferably 10 mm or more.

Hereunder, the present invention is described more specifically by way of examples, although the present invention is not limited to these examples.

EXAMPLE

Alloys having the chemical compositions shown in Table 1 were subjected to melting and casting in a vacuum to obtain 30 kg ingots having an outer diameter of 120 mm. Each ingot was subjected to hot forging and thereby made into a starting material having a thickness of 50 mm. The temperature of each ingot before hot forging was 1200°C. In addition, the starting material was subjected to hot rolling. At this time, in order to change the product strength, after the cold working with the reduction of area shown in Table 2 was applied, the thickness of the intermediate alloy material (alloy plate) was determined by back-calculation so that the thickness after cold rolling would be a uniform thickness of 11.5 mm. Thereafter, a softening heat treatment was performed which consisted of heat treatment for 10 minutes at the temperature shown in Table 2 followed by water cooling. Next, the cold working with the reduction of area shown in Table 2 was applied to thereby obtain a uniform thickness of 11.5 mm. For Test Nos. 22 and 23, after cold working, a solution heat treatment was performed which consisted of a further heat treatment for 10 minutes at the temperature shown in Table 2 followed by water cooling. Further, for Test No. 24, cold working was not performed. Note that, in the present examples, from the viewpoint of ease of experiment, alloy plates were used instead of alloy pipes.

[Table 1]

Table 1

| Steel | Chemical composition (mass%, balance: Fe and impurities) | | | | | | | | | | | | | | | |
|---|---|---|---|---|---|---|---|---|---|---|---|---|---|---|---|
| | C | Si | Mn | P | S | Cr | Ni | Mo | Cu | V | Nb | Ti | Al | N | Other |
| A | 0.012 | 0.35 | 0.58 | 0.014 | 0.0002 | 23.88 | 48.07 | 6.14 | 0.79 | 0.03 | 0.006 | 0.031 | 0.063 | 0.075 | - |
| B | 0.012 | 0.26 | 0.62 | 0.019 | 0.0002 | 23.61 | 51.76 | 7.12 | 0.68 | 0.04 | 0.110 | 0.140 | 0.038 | 0.012 | - |
| C | 0.008 | 0.12 | 0.33 | 0.012 | 0.0001 | 31.37 | 40.22 | 3.08 | 0.84 | 0.02 | 0.014 | 0.055 | 0.063 | 0.361 | - |
| D | 0.013 | 0.29 | 0.77 | 0.015 | 0.0001 | 24.65 | 48.35 | 6.61 | 0.87 | 0.01 | 0.035 | 0.022 | 0.026 | 0.215 | - |
| E | 0.011 | 0.31 | 0.66 | 0.013 | 0.0001 | 23.14 | 52.45 | 6.89 | 0.94 | 0.01 | 0.053 | 0.080 | 0.026 | 0.107 | - |
| F | 0.021 | 0.27 | 0.58 | 0.015 | 0.0001 | 25.55 | 30.14 | 2.65 | 0.82 | 0.02 | 0.005 | 0.004 | 0.046 | 0.020 | - |
| G | 0.013 | 0.24 | 0.61 | 0.014 | 0.0002 | 24.22 | 32.59 | 2.71 | 0.78 | 0.15 | 0.008 | 0.005 | 0.023 | 0.161 | - |
| H | 0.009 | 0.34 | 0.58 | 0.016 | 0.0002 | 24.16 | 48.33 | 6.09 | 0.81 | 0.03 | 0.081 | 0.005 | 0.016 | 0.069 | W: 0.14 |
| I | 0.014 | 0.31 | 0.62 | 0.014 | 0.0001 | 23.95 | 47.98 | 6.53 | 0.77 | 0.03 | 0.077 | 0.034 | 0.022 | 0.072 | Co: 0.25 |
| J | 0.008 | 0.35 | 0.61 | 0.013 | 0.0002 | 24.03 | 48.98 | 6.17 | 0.79 | 0.03 | 0.086 | 0.011 | 0.024 | 0.069 | Sn: 0.004 |
| K | 0.008 | 0.35 | 0.59 | 0.012 | 0.0002 | 23.74 | 49.55 | 6.22 | 0.76 | 0.03 | 0.088 | 0.008 | 0.016 | 0.076 | As: 0.002 |
| L | 0.009 | 0.34 | 0.59 | 0.014 | 0.0002 | 23.95 | 49.96 | 7.60 | 0.78 | 0.03 | 0.081 | 0.005 | 0.033 | 0.094 | Zn: 0.002 |
| M | 0.009 | 0.36 | 0.57 | 0.014 | 0.0002 | 24.35 | 49.72 | 6.40 | 0.79 | 0.04 | 0.082 | 0.008 | 0.061 | 0.062 | Pb: 0.001 |
| N | 0.008 | 0.34 | 0.52 | 0.019 | 0.0002 | 23.80 | 50.33 | 6.55 | 0.80 | 0.02 | 0.084 | 0.003 | 0.027 | 0.072 | Sb: 0.001 |
| O | 0.010 | 0.35 | 0.61 | 0.011 | 0.0001 | 24.13 | 50.08 | 6.49 | 0.78 | 0.03 | 0.006 | 0.004 | 0.022 | 0.177 | B: 0.0008 |
| P | 0.013 | 0.34 | 0.57 | 0.012 | 0.0002 | 24.01 | 49.88 | 6.56 | 0.81 | 0.05 | 0.005 | 0.002 | 0.031 | 0.222 | Ca: 0.0027 |
| Q | 0.012 | 0.25 | 0.60 | 0.014 | 0.0002 | 26.55 | 34.51 | 3.63 | 0.83 | 0.14 | 0.007 | 0.003 | 0.019 | 0.218 | Mg: 0.0008 |
| R | 0.014 | 0.27 | 0.57 | 0.013 | 0.0001 | 26.47 | 34.49 | 3.77 | 0.77 | 0.13 | 0.008 | 0.002 | 0.020 | 0.260 | REM: 0.012 |
| S | 0.026 | 0.31 | 0.35 | 0.011 | 0.0004 | 21.06 | 39.50 | 3.47 | 1.90 | 0.10 | 0.021 | 0.017 | 0.024 | 0.144 | - |
| T | 0.019 | 0.25 | 0.61 | 0.012 | 0.0003 | 24.73 | 30.38 | 2.85 | 0.80 | 0.04 | 0.015 | 0.003 | 0.021 | 0.197 | - |
| U | 0.016 | 0.28 | 0.47 | 0.012 | 0.0002 | 23.41 | 50.14 | 6.41 | 0.48 | 0.01 | 0.120 | 0.017 | 0.035 | 0.091 | - |

[Table 2]

[Table 2]

Table 2

| Test No. | Steel | Softening heat treatment temperature (°C) | Reduction of area during cold working (%) | Solution heat treatment temperature (°C) | YS$_{LT}$ (MPa) | YS$_{LC}$ (MPa) | YS$_{LC}$/YS$_{LT}$ | YS$_{HT}$ (MPa) | Left side value of Formula (ii) | Right side value of Formula (iii) | Left side value of Formula (iv) | Left side value of Formula (v) | Left side value of Formula (vi) | N content (mass%) | Right side value of Formula (vi) | |
|---|---|---|---|---|---|---|---|---|---|---|---|---|---|---|---|---|
| 1 | A | 1200 | 30 | - | 885 | 788 | 0.89 | 288 | 75.6 | 804 | 62.8 | 35.5 | 0.065 | 0.075 | 0.145 | Inventive example |
| 2 | B | 1200 | 28 | - | 772 | 703 | 0.91 | 282 | 96.7 | 780 | 65.3 | 43.7 | -0.048 | 0.012 | 0.032 | Comparative example |
| 3 | C | 1200 | 40 | - | 1162 | 976 | 0.84 | 357 | 78.1 | 991 | 63.8 | 24.9 | 0.342 | 0.361 | 0.422 | Inventive example |
| 4 | D | 1200 | 45 | - | 1089 | 871 | 0.80 | 334 | 72.6 | 965 | 81.0 | 38.0 | 0.269 | 0.215 | 0.349 | Inventive example |
| 5 | E | 1200 | 40 | - | 874 | 673 | 0.77 | 314 | 104.2 | 941 | 72.7 | 43.6 | 0.054 | 0.107 | 0.134 | Comparative example |
| 6 | F | 1200 | 25 | - | 837 | 778 | 0.93 | 235 | 34.1 | 662 | 25.9 | 10.6 | 0.017 | 0.020 | 0.097 | Comparative example |
| 7 | G | 1200 | 35 | - | 978 | 822 | 0.84 | 280 | 45.3 | 816 | 40.5 | 20.4 | 0.158 | 0.161 | 0.238 | Comparative example |
| 8 | H | 1200 | 30 | - | 878 | 764 | 0.87 | 277 | 66.3 | 791 | 61.7 | 35.7 | 0.058 | 0.069 | 0.138 | Inventive example |
| 9 | I | 1200 | 30 | - | 884 | 787 | 0.89 | 278 | 65.8 | 782 | 66.0 | 36.7 | 0.064 | 0.072 | 0.144 | Inventive example |
| 10 | J | 1200 | 30 | - | 879 | 765 | 0.87 | 288 | 77.0 | 816 | 62.4 | 36.7 | 0.059 | 0.069 | 0.139 | Inventive example |
| 11 | K | 1200 | 30 | - | 878 | 773 | 0.88 | 291 | 80.3 | 817 | 63.6 | 37.7 | 0.058 | 0.076 | 0.138 | Inventive example |
| 12 | L | 1200 | 35 | - | 936 | 777 | 0.83 | 309 | 84.4 | 888 | 77.8 | 39.5 | 0.116 | 0.094 | 0.196 | Inventive example |
| 13 | M | 1200 | 30 | - | 868 | 764 | 0.88 | 290 | 81.7 | 815 | 63.8 | 37.4 | 0.048 | 0.062 | 0.128 | Inventive example |
| 14 | N | 1200 | 30 | - | 889 | 765 | 0.86 | 293 | 79.6 | 833 | 66.2 | 38.4 | 0.069 | 0.072 | 0.149 | Inventive example |

(continued)

| Test No. | Steel | Softening heat treatment temperature (°C) | Reduction of area during cold working (%) | Solution heat treatment temperature (°C) | $YS_{LT}$ (MPa) | $YS_{LC}$ (MPa) | $YS_{LC}/YS_{LT}$ | $YS_{HT}$ (MPa) | Left side value of Formula (ii) | Right side value of Formula (iii) | Left side value of Formula (iv) | Left side value of Formula (v) | Left side value of Formula (vi) | N content (mass%) | Right side value of Formula (vi) | |
|---|---|---|---|---|---|---|---|---|---|---|---|---|---|---|---|---|
| 15 | O | 1200 | 35 | - | 966 | 821 | 0.85 | 326 | 94.2 | 914 | 76.1 | 38.9 | 0.146 | 0.177 | 0.226 | Inventive example |
| 16 | P | 1200 | 35 | - | 1010 | 859 | 0.85 | 341 | 98.6 | 949 | 81.2 | 40.3 | 0.190 | 0.222 | 0.270 | Inventive example |
| 17 | Q | 1200 | 35 | - | 1028 | 874 | 0.85 | 315 | 68.3 | 889 | 54.5 | 22.1 | 0.208 | 0.218 | 0.288 | Inventive example |
| 18 | R | 1200 | 35 | - | 1055 | 939 | 0.89 | 332 | 78.8 | 905 | 59.9 | 22.7 | 0.235 | 0.260 | 0.315 | Inventive example |
| 19 | S | 1200 | 35 | - | 892 | 785 | 0.88 | 274 | 59.9 | 778 | 45.6 | 31.5 | 0.072 | 0.144 | 0.152 | Inventive example |
| 20 | T | 1200 | 30 | - | 948 | 872 | 0.92 | 307 | 79.5 | 831 | 45.4 | 15.9 | 0.128 | 0.197 | 0.208 | Inventive example |
| 21 | U | 1200 | 25 | - | 890 | 837 | 0.94 | 308 | 94.4 | 824 | 66.8 | 39.1 | 0.070 | 0.091 | 0.150 | Inventive example |
| 22 | A | 1200 | 30 | 1100 | 308 | 293 | 0.95 | 262 | 188.1 | 714 | 62.8 | 35.5 | -0.512 | 0.075 | -0.432 | Comparative example |
| 23 | A | 1200 | 30 | 1150 | 289 | 280 | 0.97 | 256 | 186.6 | 690 | 62.8 | 35.5 | -0.531 | 0.075 | -0.451 | Comparative example |
| 24 | A | 1200 | 0 | - | 274 | 271 | 0.99 | 244 | 178.2 | 654 | 62.8 | 35.5 | -0.546 | 0.075 | -0.466 | Comparative example |

Formula (i): $0.80 \leqq YS_{LC}/YS_{LT} < 0.95$

Formula (ii): $YS_{HT} - 0.24 \times YS_{LT} \geqq 50.0$

Formula (iii): $YS_{LT} \geqq 443 \times (YS_{LT}/YS_{LC}) + 2.29 \times YS_{HT} - 350$

Formula (iv): $9Mo - 100N \geqq 45.0$

Formula (v): $Ni + 1.4Cu + Mo - 0.9Cr - 2Si - 1.2Mn - 5.7C + 20N + 90(0.15Nb + 0.27V + 0.3Ti) \leqq 42.0$

Formula (vi): $0.001 \times YS_{LT} - 0.820 < N < 0.001 \times YS_{LT} - 0.740$

Next, the compressive yield stress $YS_{LC}$ (MPa) and tensile yield stress $YS_{LT}$ (MPa) in the pipe axis direction were determined by the methods described above. Specifically, from the center position of the thickness of the alloy plate of each test number, a cylindrical test specimen for a compression test and a round bar specimen for a tensile test were taken in a manner so that the longitudinal direction was parallel to the rolling direction. The cylindrical test specimen had a parallel portion diameter of 4 mm and a length of 8 mm. The round bar specimen had a parallel portion diameter of 4 mm and a gage length of 20 mm. The cylindrical test specimen for a compression test was subjected to a compression test in air at normal temperature (25°C) by a method in accordance with ASTM E9 (2019). The 0.2% offset proof stress obtained by the compression test was taken as the compressive yield stress $YS_{LC}$ (MPa) in the pipe axis direction. In addition, the round bar specimen for a tensile test was subjected to a tensile test in air at normal temperature (25°C) by a method in accordance with ASTM E8/E8M (2013). The 0.2% offset proof stress obtained by the tensile test was taken as the tensile yield stress $YS_{LT}$ (MPa) in the pipe axis direction.

In addition, the tensile yield stress $YS_{HT}$ (MPa) of a test specimen after high-frequency induction heating and quenching was determined by the method described above. Specifically, from the center position of the thickness of the alloy plate of each test number, a cylindrical test specimen for performing high-frequency induction heating and quenching was taken in a manner so that the longitudinal direction was parallel to the rolling direction. Note that, the cylindrical test specimen was prepared in accordance with ASTM E8/E8M (2021), and the diameter thereof was 6 mm and the gage length was 30 mm. The cylindrical test specimen for performing high-frequency induction heating and quenching was heated from room temperature to 1150°C at a heating rate of 100°C/s and then heated to 1200°C at a heating rate of 25°C/s using a high-frequency induction heating apparatus. At this time, the region to be heated by the high-frequency induction heating apparatus was set to a region of 7.0 mm in the longitudinal direction that consisted of two regions of 3.5 mm each on the sides of both ends from the center in the longitudinal direction of the test specimen. Further, the temperature of the test specimen was measured using a thermocouple placed at the central part in the longitudinal direction of the test specimen.

Thereafter, the test specimen was held for 180 s at 1200°C. Immediately after holding, by blowing Ar gas against the test specimen, the test specimen was quenched to room temperature under conditions whereby the cooling rate in the temperature range from 1200°C to 800°C was 50°C/s. Then, using the test specimen after the high-frequency induction heating and quenching, a tensile test was carried out in air at normal temperature (25°C) in accordance with JIS Z 2241 (2011), and the obtained 0.2% offset proof stress was taken as the tensile yield stress $YS_{HT}$ (MPa) of the test specimen after high-frequency induction heating and quenching.

The obtained results are also shown in Table 2. As shown in Table 2, it is possible for an alloy material that satisfies all the provisions of the present invention to have a high tensile yield stress of 780 MPa or more and a $YS_{LC}/YS_{LT}$ value of 0.80 or more.

INDUSTRIAL APPLICABILITY

According to the present invention, a Cr-Ni alloy pipe that has high strength while also minimizing the difference between compressive yield stress and tensile yield stress can be obtained. Therefore, by selecting the Cr-Ni alloy pipe according to the present invention as a starting material for oil country tubular goods, highly reliable oil country tubular goods that are capable of maintaining high strength even when softening occurred in a weld zone can be obtained.

**Claims**

1. A Cr-Ni alloy pipe, wherein:

   a tensile yield stress $YS_{LT}$ and a compressive yield stress $YS_{LC}$ in a pipe axis direction of the Cr-Ni alloy pipe, and a tensile yield stress $YS_{HT}$ of a test specimen obtained by taking the test specimen from a center position of a wall thickness of the Cr-Ni alloy pipe so that a longitudinal direction of the test specimen is parallel to the pipe axis direction, heating the test specimen from room temperature to 1150°C at a heating rate of 100°C/s followed by heating the test specimen to 1200°C at a heating rate of 25°C/s using a high-frequency induction heating apparatus, and then holding the test specimen at 1200°C for 180 s, and thereafter blowing Ar gas against the test specimen to quench the test specimen to room temperature under conditions whereby a cooling rate in a temperature range from 1200°C to 800°C is 50°C/s,
satisfy Formula (i) to Formula (iii) below:

$$0.80 \leq YS_{LC}/YS_{LT} < 0.95 \quad \text{(i)}$$

$$YS_{HT} - 0.24 \times YS_{LT} \geq 50.0 \quad \text{(ii)}$$

$$YS_{LT} \geq 443 \times YS_{LT}/YS_{LC} + 2.28 \times YS_{HT} - 350 \quad \text{(iii)}$$

where, the meaning of each symbol in the above formulas is as follows:

$YS_{LC}$: compressive yield stress (MPa) in the pipe axis direction;
$YS_{LT}$: tensile yield stress (MPa) in the pipe axis direction; and
$YS_{HT}$: tensile yield stress (MPa) of the test specimen after high-frequency induction heating and quenching.

2. The Cr-Ni alloy pipe according to claim 1, wherein:
the tensile yield stress $YS_{LT}$ in the pipe axis direction of the Cr-Ni alloy pipe is 780 MPa or more.

3. The Cr-Ni alloy pipe according to claim 1 or claim 2, having a chemical composition comprising, in mass%,

C: 0.030% or less,
Si: 0.50% or less,
Mn: 1.00% or less,
P: 0.030% or less,
S: 0.0050% or less,
Cr: 19.00 to 32.00%,
Ni: 29.50 to 55.00%,
Mo: 2.50 to 12.00%,
Cu: 3.00% or less,
V: 0.01 to 0.50%,
Nb + Ti: 0.002 to 1.000%,
Al: 0.001 to 0.500%,
N: 0.005 to 0.400%,
W: 0 to 1.00%,
Co: 0 to 1.00%,
Sn: 0 to 0.010%,
As: 0 to 0.010%,
Zn: 0 to 0.010%,
Pb: 0 to 0.010%,
Sb: 0 to 0.010%,
B: 0 to 0.0050%,
Ca: 0 to 0.0200%,
Mg: 0 to 0.0200%,
REM: 0 to 0.100%, and
the balance: Fe and impurities.

4. The Cr-Ni alloy pipe according to claim 3, wherein the chemical composition contains one or more types of element selected from, in mass%,

W: 0.01 to 1.00%,
Co: 0.01 to 1.00%,
Sn: 0.001 to 0.010%,
As: 0.001 to 0.010%,
Zn: 0.001 to 0.010%,
Pb: 0.0005 to 0.010%,

Sb: 0.0005 to 0.010%,
B: 0.0001 to 0.0050%,
Ca: 0.0005 to 0.0200%,
Mg: 0.0001 to 0.0200%, and
REM: 0.001 to 0.100%.

5. The Cr-Ni alloy pipe according to claim 3 or claim 4, wherein the chemical composition further satisfies Formula (iv) and Formula (v) below:

$$9\text{Mo} + 100\text{N} \geq 45.0 \quad (\text{iv})$$

Ni + 1.4Cu + Mo - 0.9Cr - 2Si - 1.2Mn - 5.7C + 20N + 90(0.15Nb + 0.27V + 0.3Ti) ≤ 42.0        (v)

where, each symbol of an element in the above formulas represents a content (mass%) of a corresponding element in the alloy pipe, and is assigned a value of zero if the corresponding element is not contained.

6. The Cr-Ni alloy pipe according to any one of claim 3 to claim 5, wherein the chemical composition further satisfies Formula (vi) below:

$$0.001 \times \text{YS}_{\text{LT}} - 0.820 < \text{N} < 0.001 \times \text{YS}_{\text{LT}} - 0.740 \quad (\text{vi})$$

where, the meaning of each symbol in the above formula is as follows:

YS$_{\text{LC}}$: compressive yield stress (MPa) in the pipe axis direction; and
N: content of N (mass%) in the alloy pipe.

## INTERNATIONAL SEARCH REPORT

| International application No. |
|---|
| **PCT/JP2023/012654** |

**A.    CLASSIFICATION OF SUBJECT MATTER**

*C22C 19/05*(2006.01)i; *C22C 30/06*(2006.01)i; *C22F 1/00*(2006.01)n; *C22F 1/10*(2006.01)n

FI:    C22C19/05 E; C22C30/06; C22F1/00 612; C22F1/00 623; C22F1/00 626; C22F1/00 630A; C22F1/00 630M; C22F1/00 640A; C22F1/00 641B; C22F1/00 682; C22F1/00 683; C22F1/00 684B; C22F1/00 684C; C22F1/00 685Z; C22F1/00 686A; C22F1/00 691B; C22F1/00 694A; C22F1/10 H

According to International Patent Classification (IPC) or to both national classification and IPC

**B.    FIELDS SEARCHED**

Minimum documentation searched (classification system followed by classification symbols)

C22C19/05; C22C30/06; C22F1/00; C22F1/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2018/225869 A1 (NIPPON STEEL & SUMITOMO METAL CORPORATION) 13 December 2018 (2018-12-13) <br> paragraphs [0053]-[0073], [0088]-[0094], tables 1, 3 | 1-2 |
| A | | 3-6 |
| A | WO 2012/128258 A1 (SUMITOMO METAL INDUSTRIES, LTD.) 27 September 2012 (2012-09-27) | 1-6 |
| A | WO 2021/070735 A1 (NIPPON STEEL CORPORATION) 15 April 2021 (2021-04-15) | 1-6 |
| A | JP 2020-94235 A (SANYO SPECIAL STEEL CO., LTD.) 18 June 2020 (2020-06-18) | 1-6 |
| A | WO 2022/196196 A1 (JFE STEEL CORPORATION) 22 September 2022 (2022-09-22) | 1-6 |
| A | WO 2021/256128 A1 (JFE STEEL CORPORATION) 23 December 2021 (2021-12-23) | 1-6 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 June 2023** | **27 June 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/012654**

| Patent document cited in search report | | | Publication date (day/month/year) | Patent family member(s) | | | Publication date (day/month/year) |
|---|---|---|---|---|---|---|---|
| WO | 2018/225869 | A1 | 13 December 2018 | US | 2021/0292864 | A1 | |
| | | | | paragraphs [0118]-[0158], [0177]-[0184], tables 1, 3 | | | |
| | | | | EP | 3636789 | A1 | |
| | | | | CN | 110709527 | A | |
| | | | | CA | 3066342 | A1 | |
| | | | | BR | 112019025658 | A2 | |
| | | | | ES | 2871503 | T3 | |
| WO | 2012/128258 | A1 | 27 September 2012 | US | 2014/0083576 | A1 | |
| | | | | EP | 2690188 | A1 | |
| | | | | CN | 103443318 | A | |
| | | | | RU | 2013147418 | A | |
| | | | | BR | 112013023620 | A2 | |
| | | | | ES | 2711667 | T3 | |
| WO | 2021/070735 | A1 | 15 April 2021 | US | 2022/0411906 | A1 | |
| | | | | EP | 4043590 | A1 | |
| | | | | CN | 114502757 | A | |
| JP | 2020-94235 | A | 18 June 2020 | (Family: none) | | | |
| WO | 2022/196196 | A1 | 22 September 2022 | (Family: none) | | | |
| WO | 2021/256128 | A1 | 23 December 2021 | EP | 4137243 | A1 | |
| | | | | CN | 115667560 | A | |
| | | | | BR | 112022023539 | A2 | |
| | | | | AR | 122645 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012128258 A